(19) Europäisches Patentamt
European Patent Office
Office européen des brevets

(11) Veröffentlichungsnummer: **0 365 916 B1**

(12) **EUROPÄISCHE PATENTSCHRIFT**

(45) Veröffentlichungstag der Patentschrift: **08.12.93**

(51) Int. Cl.5: **C08L 81/06**, C08J 5/18, //(C08L81/06,67:00,69:00)

(21) Anmeldenummer: **89118840.1**

(22) Anmeldetag: **11.10.89**

Die Akte enthält technische Angaben, die nach dem Eingang der Anmeldung eingereicht wurden und die nicht in dieser Patentschrift enthalten sind.

# (54) Polymermischungen.

(30) Priorität: **24.10.88 DE 3836176**

(43) Veröffentlichungstag der Anmeldung:
**02.05.90 Patentblatt 90/18**

(45) Bekanntmachung des Hinweises auf die Patenterteilung:
**08.12.93 Patentblatt 93/49**

(84) Benannte Vertragsstaaten:
**BE DE ES FR GB IT NL**

(56) Entgegenhaltungen:
**EP-A- 0 000 732**
**EP-A- 0 133 907**
**EP-B- 0 000 733**

(73) Patentinhaber: **BAYER AG**
**D-51368 Leverkusen(DE)**

(72) Erfinder: **Weymans, Günther, Dr.**
**Karl-Arnold-Strasse 4**
**D-5090 Leverkusen 1(DE)**
Erfinder: **Reuter, Knud, Dr.**
**Scheiblerstrasse 99**
**D-4150 Krefeld(DE)**
Erfinder: **Dhein, Rolf, Dr.**
**Deswatinesstrasse 30**
**D-4150 Krefeld(DE)**
Erfinder: **Meier, Erich, Dr.**
**Bertha-von-Suttner-Strasse 19**
**D-5090 Leverkusen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 365 916 B1

## Beschreibung

Gegenstand der Erfindung sind Mischungen, enthaltend aromatische Polyethersulfone auf Basis von Dihydroxydiphenylcycloalkanen der Formel (I)

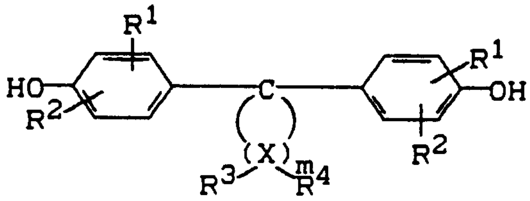

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-Alkyl, insbesondere Benzyl und Cumyl, |
| m | eine ganze Zahl von 4 bis 7, bevorzugt 4 oder 5 |
| $R^3$ und $R^4$ | für jedes X individuell wählbar, unabhängig voneinander Wasserstoff, oder $C_1$-$C_6$-Alkyl und Alkyl und |
| X | Kohlenstoff bedeuten, |

mit der Maßgabe, daß an mindestens einem Atom X $R^3$ und $R^4$ gleichzeitig Alkyl sind,

mit anderen organischen Polymeren, sowie Folien einer Dicke von 1 - 3000 µm aus diesen Mischungen.

Diphenole der Formel (I) sind Gegenstand der älteren Patentanmeldung DE-A-3 832 396, offengelegt am 15.02. 1990, die speziellen aromatischen Polyethersulfone sind Gegenstand der älteren Patentanmeldung DE-A-3 833 385, offengelegt am 05.04. 1990.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkyl-substituiert, dagegen ist die Alkyl-disubstitution in $\beta$-Stellung zu C-1 bevorzugt.

Besonders bevorzugt ist die Alkyldisubstitution in $\beta$-Stellung und die andere $\beta$-Stellung mono-alkylsubstituiert.

Besonders bevorzugt als Ausgangsmaterial sind Dihydroxydiphenylcycloalkane mit 5 und 6 Ring-C-Atomen im cycloaliphatischen Rest (m = 4 oder 5 in Formel (I)) wie beispielsweise die Diphenole der Formeln

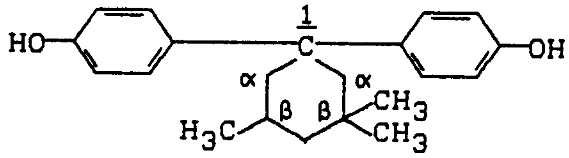

(II)

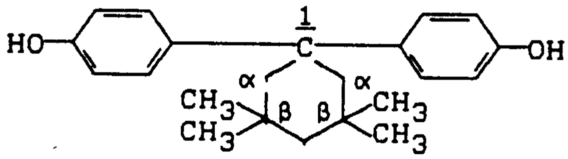

(III) und

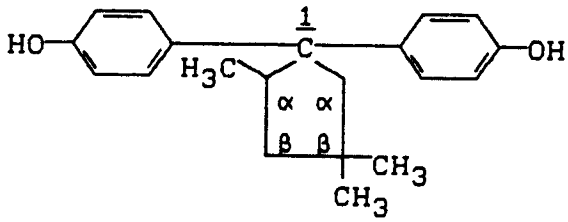

(IV),

wobei das 1,1-Bis-(4-hydroxyphenyl)-3.3.5-trimethylcyclohexan (Formel II) besonders bevorzugt ist.

Dihydroxydiphenylcycloalkane der Formel (I) können in an sich bekannter Weise durch Kondensation von Phenolen der Formel (V)

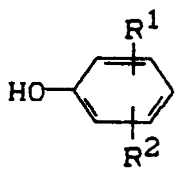

(V)

und Ketonen der Formel (VI)

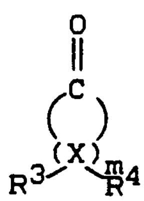

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich. (Vgl. z.B. Ullmann, Encyklopädie der technischen Chemie, 4. Auflage, Band 15, S. 61-77.)

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, o-Phenylphenol und o- oder p-Benzylphenol.

Die Ketone der Formel (VI) sind literaturbekannt (siehe beispielsweise Beilsteins Handbuch der organischen Chemie, 4. Auflage, Band 7.) Ein allgemeines Verfahren zur Herstellung von Ketonen der Formel (VI) ist beispielsweise in "Organikum" 15. Auflage 1977, VEB-Deutscher Verlag der Wissenschaften, Berlin S. 698 beschrieben.

Beispiele für Ketone der Formel (VI) sind: 3,3-Dimethylcyclopentanon, 2,2-Dimethylcyclohexanon, 3,3-Dimethylcyclohexanon, 4,4-Dimethylcyclohexanon, 3-Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon,3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

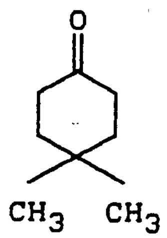 , 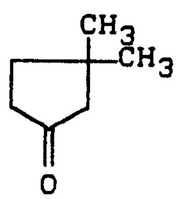 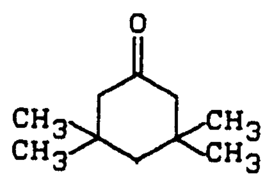

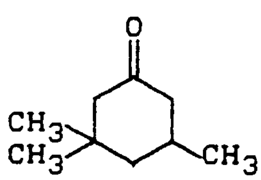 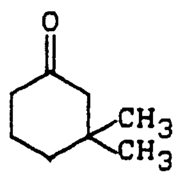 und 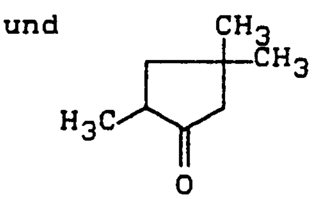

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30 °C bis 300 °C, vorzugsweise von -15 °C bis 150 °C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise:
Acetanhydrid, Zeolithe, Polyphosphorsäure und Phosphorpentoxid.

Erfindungsgemäß in den Mischungen verwendet werden aromatische Polyethersulfone mit der wiederkehrenden Struktureinheit

-O-E-O-E'- (VII)

worin -E- ein zweibindiger Rest eines aromatischen Sulfons der Formel (VIIIa)

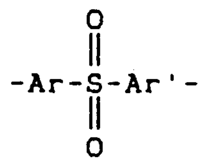

(VIII a)

mit Ar und Ar' = gleiche oder verschiedene difunktionelle aromatische Reste mit 6 bis 50-C-Atomen und worin

-O-E'-O- (IX a)

ein zweibindiger Diphenolat-Rest ist, die dadurch gekennzeichnet sind, daß von 0,1 Mol% bis 100 Mol%, vorzugsweise von 3 Mol% bis 100 Mol% und insbesondere von 10 Mol% bis 100 Mol% der Diphenolat-Reste (IX a) solche der Formel (Ia)

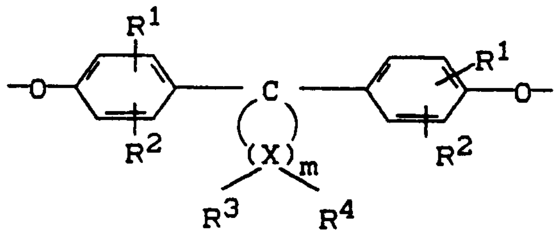

(I a)

sind, worin X, $R^1$, $R^2$, $R^3$, $R^4$ und m wie in Formel (I) definiert sind.

Die aromatischen Polyethersulfone der Erfindung haben bevorzugt mittlere Molekulargewichte $\overline{M}w$ (Gewichtsmittel) von 758 bis 500 000, insbesondere von 3 000 bis 200 000 und speziell von 5 000 bis 100 000 g/mol.

Aromatische Polyethersulfone sind bekannt (siehe beispielsweise GB-PS 1 078 234, US-PS 4 010 147 und EP-OS 0 135 938). Sie können beispielsweise durch Umsetzung von Dialkalisalzen von Diphenolen mit Dihalogen-diarylsulfonen in einem polaren Lösungsmittel hergestellt werden, (siehe beispielsweise GB-PS 1 078 234), wobei die Dialkalisalze der Diphenole auch in situ erzeugt werden können.

Die in den erfindungsgemäßen Mischungen zu verwendenden Polyethersulfone können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituierte Pyrrolidone, wie N-Methylpyrrolidon) N,N-Dimethylformamid, N,N-Dimethylacetamid, Dimethylsulfoxid, Diphenylsulfon, Sulfolan oder Tetramethylharnstoff, eingesetzt werden. Es können anteilig z.B. 0,1 bis 200 Gew.-%, bezogen auf das Gewicht des polaren Lösungsmittels, andere, weniger polare Lösungsmittel mitverwendet werden, z.B. aromatische Kohlenwasserstoffe wie Toluol, Xylol, Mesitylen, Chlorbenzol, oder aliphatische Kohlenwasserstoffe wie Benzin, Cyclohexan.

Es wurden also zur Herstellung der erfindungsgemäß zu verwendenden Polyethersulfone mit der Struktureinheit (VII) Dialkalidiphenolate (IXb)

Alkali-O-E-O-Alkali (IX b)

mit Dihalogen-diaryl-sulfonen

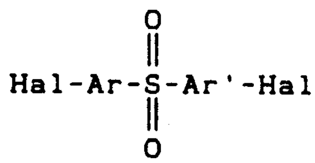

(VIII)

worin Ar und Ar' gleiche oder verschiedene difunktionelle aromatische Reste mit 6 bis 50 C-Atomen und Hal Halogen, bevorzugt Fluor, Chlor und Brom bedeuten, in polaren Lösungsmitteln umgesetzt, wobei 0,1 Mol% bis 100 Mol% vorzugsweise 3 Mol% bis 100 Mol%, und insbesondere 10 Mol% bis 100 Mol% der Dialkalidiphenolate (IXb) der Formel Ib

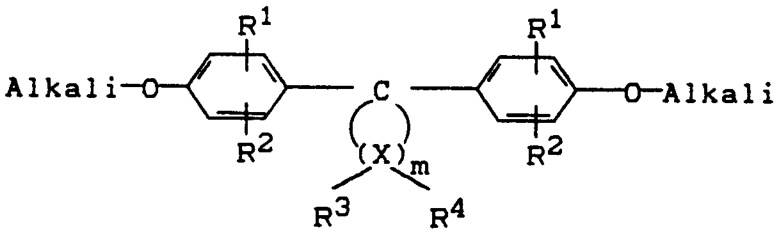

(I b)

verwendet werden,
worin X, $R^1$, $R^2$,$R^3$, $R^4$ und m wie in Formel (I) definiert sind, und worin polare Lösungsmittel wie N-alkylierten Caprolactamen oder N-alkylierten Pyrrolidonen, vorzugsweise N-alkylierte Pyrrolidonen verwendet werden.

Geeignete Diphenole der Formel (IX) sind z.B.
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole (IX) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole (IX) sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,

$\alpha,\alpha'$-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4'-Dihydroxydiphenylsulfon.

Besonders bevorzugte andere Diphenole sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan und
4,4'-Dihydroxydiphenylsulfon.

Sie können einzeln oder im Gemisch eingesetzt werden.

Die Formel (IXa) und (IXb) stellen in durch Entfernen von 2 H-Atomen gebildeten Reste dieser Diphenole beziehungsweise die Alkalisalze dieser Verbindungen dar.

Geeignete Dihalogendiarylsulfone (VIII) sind z.B.
4,4'-Dichlordiphenylsulfon,
4,4'-Difluordiphenylsulfon,
4-Chlor-4'-fluordiphenylsulfon,
3,3'-Dinitro-4,4'-dichlordiphenylsulfon,
3,3'-Dinitro-4,4'-difluordiphenylsulfon,
4,4'-Dibromdiphenylsulfon,

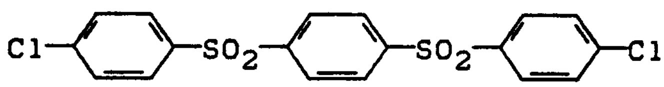,

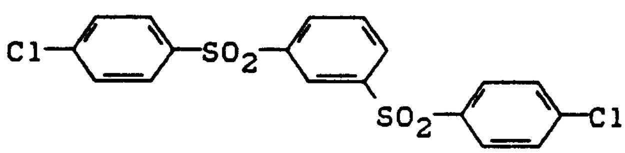

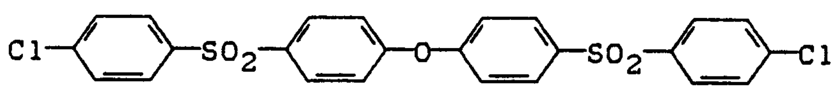,

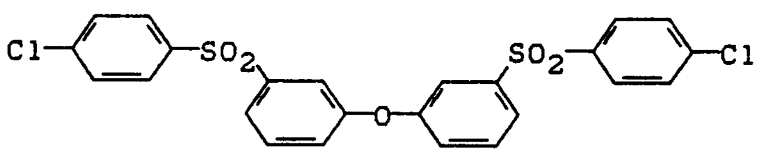,

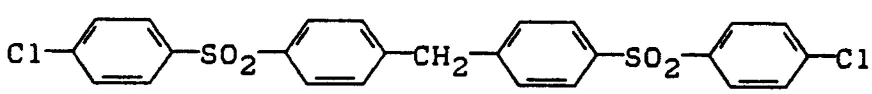

Bevorzugt sind demnach in Formel (VIII)
Ar und Ar' p-Phenylenreste oder mit Alkyl oder Nitrogruppen substituierte p-Phenylenreste oder Reste der Formel

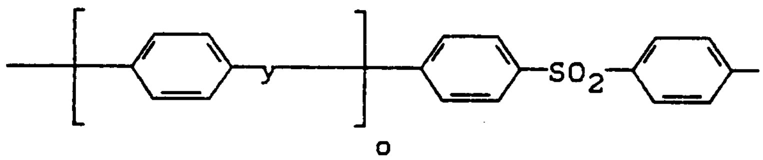

mit y = -O-, $-CH_2-$, $-SO_2-$, Einfachbindung und o = 0 oder 1
und Hal = Fluor, Chlor oder Brom.

Als Alkali in den Dialkaliphenolaten (I b) und (IX b) dient vorzugsweise Natrium und Kalium.

Als Halogen in den Dihalogendiarylsulfonen (III) dient vorzugsweise Chlor und Fluor, insbesondere Chlor.

Bevorzugte, in den erfindungsgemäßen Mischungen zu verwendende Polyethersulfone sind solche, die mindestens 10 Mol-% der wiederkehrenden Einheit

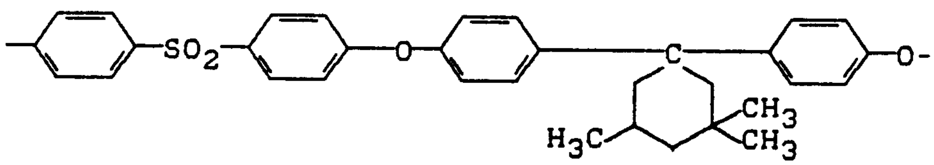

enthalten, und ein Molekulargewicht (Gewichtsmittel) von über 3000 g/mol aufweisen.

Diese aromatischen Polyethersulfone können bei Temperaturen von 130 °C bis 320 °C, bevorzugt 145 °C bis 280 °C und bei Drucken von 0,8 bis 10 bar, vorzugsweise 1 bis 3 bar, insbesondere bei atmosphärischem Umgebungsdruck, hergestellt werden.

Das molare Mengenverhältnis der Alkalidiphenolate (I b) und (IX b) zu den Dihalogen-diaryl-sulfonen (VIII) liegt zwischen 0,5 und 2, bevorzugt 0,8 und 1,2, besonders bevorzugt 0,95 und 1,05, wobei für hohe Molekulargewichte ein Verhältnis von 1 oder nahe bei 1 gewählt werden muß.

Die Menge an polaren Lösungsmitteln beträgt 0,5 bis 50, bevorzugt 2 bis 20 Gewichtsteile bezogen auf das Gesamtgewicht der Polyethersulfonbildungskomponenten.

Die für die erfindungsgemäßen Mischungen verwendbaren Polyethersulfone können wie folgt aus den erhaltenen Reaktionsgemischen gewonnen werden.

Man verdünnt das Reaktionsgemisch, insbesondere wenn sehr hochviskose Lösungen vorliegen, z.B. mit den polaren Reaktions-Lösemittel oder einem anderen Lösungsmittel für das Polyethersulfon, und filtriert. Nach Neutralisation des Filtrats mit einer geeigneten Säure, z.B. Essigsäure, wird das Polyethersulfon durch Eingießen in ein geeignetes Fällungsmedium, z.B. Wasser, Alkohole (wie z.B. Methanol, Isopropanol) oder Wasser-Alkohol-Gemische, z.B. $H_2O$/Methanol 1:1, ausgefällt, isoliert und anschließend getrocknet.

Die für die erfindungsgemäßen Mischungen verwendbaren Polyethersulfone sind thermoplastische Kunststoffe mit hoher Wärmeformbeständigkeit.

Sie können beispielsweise verarbeitet werden durch Extrusion, Spritzgießen, Sintern oder Verpressen.

Gegenstand dieser Erfindung sind Mischungen enthaltend

(a) aromatische Polyethersulfone auf Basis von Dihydroxydiphenylcycloalkanen der Formel (I)

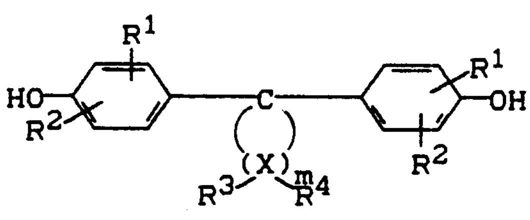 (I),

worin

$R^1$ und $R^2$ unabhängig voneinander Wasserstoff, Halogen, bevorzugt Chlor oder Brom, $C_1$-$C_8$-

Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-Alkyl, insbesondere Benzyl und Cumyl,

m eine ganze Zahl von 4 bis 7, bevorzugt 4 oder 5

$R^3$ und $R^4$ für jedes X individuell wählbar, unabhängig voneinander Wasserstoff, oder $C_1$-$C_6$-Alkyl und Alkyl und

X Kohlenstoff bedeuten,

mit der Maßgabe, daß an mindestens einem Atom X $R^3$ und $R^4$ gleichzeitig Alkyl sind,

und

(b) andere organische Polymere.

Die Mischungen enthalten im allgemeinen 0,1 bis 99,9 Gew.-% des aromatischen Polyethersulfons (a), bevorzugt 1 bis 98 Gew.-% und insbesondere 2,5 bis 90 Gew.-% und entsprechend 99,9 bis 0,1 Gew.-% der anderen organischen Polymeren, bevorzugt 99 bis 2 Gew.-%, besonders bevorzugt 97,5 bis 10 Gew.-%.

Daneben können die Mischungen übliche Additive wie Stabilisatoren, Füllstoffe, Farbstoffe enthalten.

Die Mischungen können mit den üblichen Methoden der Vermischung von Kunststoffen hergestellt werden, z.B. durch Schmelzkompoundieren, Mischen von Pulvern, gemeinsame Extrusion, Vermischen von Lösungen und Eindampfen, Vermischen von Latices (oder anderen Dispersionen) und gemeinsames Fällen. Im Einzelfall richtet sich die gewählte Methode nach Art und Aggregatzustand des Mischungspartners.

Andere organische Polymere (b) im Sinne der Erfindung sind beispielsweise

b1) amorphe Thermoplaste, vorzugsweise solche mit einer Glastemperatur von mehr als 40 °C, insbesondere von 60 °C bis 220 °C, als auch

b2) teilkristalline Thermoplaste, vorzugsweise solche mit einer Schmelztemperatur von mehr als 60 °C, insbesondere von 80 °C bis 400 °C.

Elastomere für die Komponenten (b) der erfindungsgemäßen Mischungen sind

b3) solche Polymere, die eine Glastemperatur von unter 0 °C, vorzugsweise von unter -10 °C und insbesondere von -15 °C bis -140 °C, haben.

Beispiele für andere amorphe Thermoplasten b1) sind amorphe Polymere aus der Klasse der Polycarbonate, Polyamide, Polyolefine, Polysulfone, Polyketone, thermoplastische Vinylpolymerisate wie Polymethylacrylsäureester oder Homopolymerisate von Vinylaromaten, Copolymerisate von Vinylaromaten oder Pfropfpolymerisate von Vinylmonomeren auf Kautschuke, Polyether, Polyimide und thermoplastische Polyurethane, aromatische Polyester (Carbonate) und flüssig-kristalline Polymere.

Beispiele für kristalline Thermoplasten b2) sind aliphatisch-aromatische Polyester, Polyarylensulfide sowie die teilkristallinen Vertreter der vorstehend unter b1) subsummierten Thermoplasten.

Beispiele für Elastomere b3) sind die verschiedensten Kautschuke wie Ethylen-Propylen-Kautschuk, Polyisopren, Polychloropren, Polysiloxane, ataktisches Polypropylen, Dien-, Olefin- und Acrylatkautschuke und Naturkautschuke, Styrol-Butadien-Blockcopolymere, Ethylen-Copolymerisate mit Vinylacetat oder mit (Meth)acrylsäureestern, elastische Polyurethane, soweit nicht als Thermoplasten unter b1) oder b2) subsumiert, und elastische Polycarbonat-Polyether-Blockcopolymere.

Amorphe Thermoplasten b1) sind insbesondere bekannte Polycarbonate einschließlich der in der deutschen Patentanmeldung P 3 832 396.6 beschriebenen. Polycarbonate können sowohl Homopolycarbonate als auch Copolycarbonate sein, sie können sowohl linear als auch verzweigt sein. Besonders bevorzugtes Bisphenol für die thermoplastischen Polycarbonate (b) ist Bisphenol-A [= 2,2-Bis-(4-hydroxyphenyl)-propan].

Thermoplastische Polycarbonate sind bekannt.

Die Molekulargewichte $\overline{M}w$ (Gewichtsmittelmolekulargewicht, ermittelt nach der Gelpermeationschromatographie in Tetrahydrofuran) der thermoplastischen Polycarbonate liegen zwischen 10.000 und 300.000, vorzugsweise zwischen 12.000 und 150.000 g/mol.

Die thermoplastischen Polycarbonate sind sowohl allein als auch im Gemisch als Komponente (b) der erfindungsgemäßen Mischungen verwendbar.

Besonders bevorzugt sind Mischungen aus den aromatischen Polyethersulfonen auf Basis der Diphenole gemäß Formel (I) und aromatischen Polycarbonaten auf Basis von Bisphenol A (und gegebenenfalls bis zu 10 Gew.-% eines anderen Bisphenols) mit Molekulargewichten von 8000 bis 150 000 g/mol, bevorzugt 10 000 bis 120 000 g/mol und besonders bevorzugt 15 000 bis 80 000 g/mol. Die Mischungen enthalten im allgemeinen 99,5 bis 50 Gew.-% Polycarbonat und 0,1 bis 50 Gew.-% aromatisches Polyethersulfon. Es ist wichtig, daß in den gesamten, in der Mischung enthaltenen Bisphenolresten 1 bis 30 Mol-%. Bisphenol A-Reste und 99 bis 70 Gew.-% Reste des Bisphenols der Formel (I) oder 99 bis 70 Mol % Bisphenol A-Reste und 1 bis 30 Mol %. Reste des Bisphenols der Formel (I) sind. Diese Mischungen haben hohe Wärmeformbeständigkeit und sind transparent. Daher kommen sie für optische Anwendungen in Frage.

Bevorzugte andere Thermoplasten (b) zur Herstellung der erfindungsgemäßen Mischungen sind auch aliphatisch-aromatische thermoplastische Polyester, besonders bevorzugt Polyalkylenterephthalate, also beispielsweise solche auf Basis von Ethylenglykol, Propandiol-1,3, Butandiol-1,4, Hexandiol-1,6 und 1,4-Bis-hydroxymethylcyclohexan.

Die Molekulargewichte ($\overline{M}w$) dieser Polyalkylenterephthalate liegen zwischen 10.000 und 80.000. Die Polyalkylenterephthalate können nach bekannten Verfahren beispielsweise aus Terephthalsäuredialkylester und dem entsprechenden Diol durch Umesterung erhalten werden (s. z. B. US-Patente 2 647 885, 2 643 989, 2 534 028, 2 578 660, 2 742 494, 2 901 466).

Diese Polyester sind bekannt. Weiterhin bevorzugte andere Thermoplasten sind thermoplastische Polyamide.

Es eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise aus Adipinsäure beziehungsweise Caprolactam, aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethyldiamin und/oder Isophorondiamin bestehen und deren Zusammensetzungen im Prinzip aus dem Stand der Technik bekannt sind (siehe beispielsweise Encyclopedie of Polymers, Vol. 11, S. 315 ff).

Außerdem sind geeignet, teilkristalline Polyamide, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6 oder Copolyamide mit geringem Anteil, bis etwa 10 Gewichtsprozent an anderen Co-Komponenten.

Geeignete Polyamide sind auch amorphe Polyamide, erhalten beispielsweise durch Polykondensation von Diaminen, wie beispielsweise von Hexamethylendiaminen, Decamethylendiamin, 2,2,4- beziehungsweise 2,4,4-Trimethylhexamethylendiamin, m- beziehungsweise p-Xylylendiamin, Bis-(4-aminocyclohexyl)-methan, Gemischen aus 4,4'- und 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5-trimethyl-cyclohexylamin, 2,5-Bis-(aminomethyl)-norbornan, 2,6-Bis-(aminomethyl)-norbornan, 1,4-Diamino-methylcyclohexan und von beliebigen Gemischen dieser Diamine, mit Dicarbonsäuren wie beispielsweise mit Oxalsäure, Adipinsäure, Azelainsäure, Decandicarbonsäure, Heptadecandicarbonsäure, 2,2,4-Trimethyladipinsäure, 2,4,4-Trimethyladipinsäure, Isophthalsäure und Terephthalsäure und mit beliebigen Gemischen dieser Dicarbonsäuren. Es sind somit auch amorphe Copolyamide einbezogen, die durch Polykondensation mehrerer der vorstehend genannten Diamine und/oder Dicarbonsäuren erhalten werden. Ferner sind amorphe Copolyamide einbezogen, die unter Mitverwendung von ω-Aminocarbonsäuren wie ω-Aminocapronsäure, ω-Aminoundecansäure oder ω-Aminolaurinsäure oder von deren Lactamen hergestellt sind.

Besonders geeignete, amorphe, thermoplastische Polyamide sind solche, die aus Isophthalsäure, Hexamethylendiamin und weiteren Diaminen wie 4,4'-Diaminodicyclohexylmethan, Isophorondiamin, 2,2,4-beziehungsweise 2,4,4-Trimethylhexamethylendiamin, 2,5- und/oder 2,6-Bis-(aminomethyl)-norbornan erhältlich sind, solche, die aus Isophthalsäure, 4,4'-Diamino-di-cyclohexylmethan und ω-Caprolactam erhältlich sind, solche, die aus Isophthalsäure, 3,3-Dimethyl-4,4'-diamino-dicyclohexylmethan und ω-Laurinlactam erhältlich sind, und solche, die aus Terephthalsäure und dem Isomerengemisch aus 2,2,4- und 2,4,4-Trimethylhexamethylendiamin erhältlich sind.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diaminoisomeren

1 bis 30 Mol-% des 2,4'-Diaminoisomeren

0 bis 2 Mol-% des 2,2'-Diaminoisomeren

und gegebenenfalls entsprechend höherkondensierten Diaminen, die durch Hydrierung von Diaminodiphenylmethan technischer Qualität erhalten werden.

Geeignete thermoplastische Polyamide können auch aus Mischungen von teilkristallinen und amorphen Polyamiden bestehen, wobei vorzugsweise der Anteil an amorphem Polyamid unter dem Anteil an teilkristallinem Polyamid liegt. Auch die amorphen Polyamide und deren Herstellung sind aus dem Stand der Technik bekannt (siehe beispielsweise Ullmann, Enzyklopädie d. technischen Chemie, Band 19, S. 50).

Bevorzugte andere Thermoplasten b) sind auch thermoplastische lineare oder verzweigte Polyarylensulfide. Sie haben Struktureinheiten der allgemeinen Formel

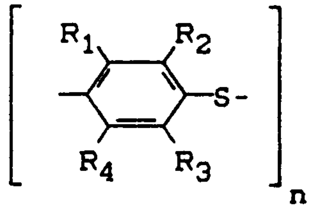

wobei $R_1$ bis $R_4$ unabhängig oder gleich sein können und $C_1$-$C_6$-Alkyl, Phenyl oder Wasserstoff sind. Weiterhin können die Polyarylensulfide auch Diphenyl-Einheiten enthalten.

Polyarylensulfide und ihre Herstellung sind bekannt (siehe beispielsweise US-PS 33 54 129 und EP-OS 0 171 021).

Geeignet als andere Thermoplasten b) sind auch thermoplastische Polyarylensulfone, die nicht auf der Basis von Diphenolen der Formel (I) hergestellt worden sind.

Geeignete Polyarylensulfone haben mittlere Gewichtsmittelmolekulargewichte $\overline{M}w$ (gemessen nach der Lichtstreumethode in $CHCl_3$) zwischen 1.000 und 200.000, vorzugsweise zwischen 20.000 und 60.000. Beispiele dafür sind die nach bekannten Verfahren erhältlichen Polyarylensulfone aus 4,4'-Dichlordiphenylsulfon und einem Bisphenol, insbesondere 2,2-Bis-(4-hydroxyphenyl)-propan, mit mittleren Gewichtsmittelmolekulargewichten $\overline{M}w$ von 2.000 bis 200.000.

Diese Polyarylensulfone sind bekannt (siehe beispielsweise US-PS 3 264 536, DE-AS 1 794 171, GB-PS 1 264 900, US-PS 3 641 207, EP-A-00 38 028, DE-OS 3 601 419 und DE-OS 3 601 420). Die geeigneten Polyarylensulfone können auch in bekannter Weise verzweigt sein (siehe beispielsweise DE-OS 2 305 413).

Bevorzugte andere Thermoplasten b) sind auch thermoplastische Polyphenylenoxide, vorzugsweise Poly-(2,6-dialkyl-1,4-phenylenoxide). Erfindungsgemäß geeignete Polyphenylenoxide haben Gewichtsmittelmolekulargewichte $\overline{M}w$ (gemessen nach der Lichtstreumethode in Chloroform) zwischen 2.000 und 100.000, vorzugsweise zwischen 20.000 und 60.000. Diese Polyphenylenoxide sind bekannt.

Die bevorzugten Poly-(2,6-dialkyl-1,4-phenylenoxide) können nach bekannten Verfahren durch oxidierende Kondensation von 2,6-Dialkylphenolen mit Sauerstoff in Anwesenheit von Katalysatorkombinationen aus Kupfersalzen und tertiären Aminen erhalten werden (siehe beispielsweise DE-OS 2 126 434 und US-PS 3 306 875).

Geeignete Poly-(2,6-dialkyl-1,4-phenylenoxide) sind insbesondere die Poly-[2,6-di($C_1$-$C_4$-alkyl)-1,4-phenylenoxide] wie beispielsweise Poly-(2,6-dimethyl-1,4-phenylenoxid).

Bevorzugte andere Thermoplasten b) sind auch aromatische Polyetherketone (siehe beispielsweise GB-PS 1 078 234, US-PS 4 010 147 und EP-OS 0 135 938).

Sie enthalten das wiederkehrende Strukturelement

-O-E-O-E'- ,

worin -E'- der zweibindige Rest eines Bisarylketons und -O-E-O- ein zweibindiger Diphenolat-Rest ist.

Sie können beispielsweise gemäß GB-PS 1 078 234 aus Dialkalidiphenolaten der Formel Alkali-O-E-O-Alkali und Bis-(halogenaryl)-ketonen der Formel Hal-E'-Hal (mit Hal = Halogen) hergestellt werden. Ein geeignetes Dialkalidiphenolat ist z. B. das des 2,2-Bis-(4-hydroxyphenyl)-propans, ein geeignetes Bis-(halogenaryl)-keton ist das 4,4'-Dichlorbenzophenon.

Bevorzugte andere Thermoplasten b) sind auch thermoplastische Vinyl-Polymerisate.

Vinyl-Polymerisate im Sinne dieser Erfindung sind Homopolymerisate von Vinylverbindungen, Copolymerisate von Vinylverbindungen und Pfropfpolymerisate von Vinylverbindungen auf Kautschuke.

Erfindungsgemäß geeignete Homopolymerisate und Copolymerisate sind solche von Styrol, $\alpha$-Methylstyrol, Acrylnitril, Methacrylnitril, $C_1$-$C_{12}$-(Cyclo)-Alkyl-Estern der (Meth)Acrylsäure, $C_1$-$C_4$-Carbonsäure-Vinylester, wobei die Copolymerisate aus Mischungen dieser Vinyl-Verbindungen nach bekannten Methoden erhältlich sind.

Die Homo- beziehungsweise Copolymerisate sollen Grenzviskositäten (Staudinger-Indices) zwischen 0,3 und 1,5 dl/g (gemessen bei 23 °C in Toluol in bekannter Weise) haben.

Geeignete Vinylpolymerisate sind beispielsweise thermoplastische Poly-$C_1$-$C_4$-alkylmethacrylate, beispielsweise solche des Methyl-, Ethyl-, Propyl- oder Butylmethacrylsäureesters, vorzugsweise des Methyl- oder Ethyl-methacrylsäureesters. Es sind sowohl Homopolymerisate als auch Copolymerisate dieser Methacrylsäureester darunter zu verstehen. Darüber hinaus können andere, ethylenisch ungesättigte copolymerisierbare Monomere wie beispielsweise (Meth)Acrylnitril, (α-Methyl)-Styrol, Bromstyrol, Vinylacetat, Acrylsäure- $C_1$-$C_8$-alkylester, (Meth)Acrylsäure, Ethylen, Propylen und N-Vinylpyrrolidon in untergeordneten Mengen einpolymerisiert sein.

Die erfindungsgemäß geeigneten thermoplastischen Poly-$C_1$-$C_4$-alkyl-methacrylate sind literaturbekannt oder nach literaturbekannten Verfahren erhältlich.

Geeignete Vinylpolymerisate sind auch Copolymerisate aus Styrol oder α-Methylstyrol und Acrylnitril, die gegebenenfalls bis zu 40 Gew.-% Ester der Acrylsäure oder Methacrylsäure, insbesondere Methylmethacrylat oder n-Butylacrylat enthalten. Styrolderivate müssen auf jeden Fall als Monomere enthalten sein. Die Styrolderivate sind dabei in Anteilen zwischen 100 und 10 Gew.-%, bevorzugt zwischen 90 bis 20 Gew.-%, besonders bevorzugt zwischen 80 bis 30 Gew.-%, enthalten, die nach üblichen Verfahren wie radikalische Polymerisation in Masse, Lösung, Suspension oder Emulsion, bevorzugt aber durch radikalische Emulsionspolymerisation in Wasser erhalten werden.

Geeignete Pfropfpolymerisate entstehen durch Polymerisation der oben genannten Vinylmonomeren oder Vinylmonomerengemische in Gegenwart von Kautschuken mit Glastemperaturen <0 °C, vorzugsweise <-20 °C. Die Pfropfpolymerisate enthalten in der Regel 1 bis 85 Gew.-%, bevorzugt 10 bis 80 Gew.-%, Kautschuk. Die Pfropfpolymerisate lassen sich durch übliche Verfahren in Lösung, Masse oder Emulsion, bevorzugt in Emulsion, herstellen, wobei Vinylmonomerengemische simultan oder sukzessive pfropfpolymerisiert werden können.

Geeignete Kautschuke sind vorzugsweise Dienkautschuke und Acrylatkautschuke.

Dienkautschuke sind beispielsweise Polybutadien, Polyisopren und Copolymerisate von Butadien mit bis zu 35 Gew.-% Comonomeren wie Styrol, Acrylnitril, Methylmethacrylat und $C_1$-$C_6$-Alkylacrylaten.

Acrylatkautschuke sind beispielsweise vernetzte, teilchenförmige Emulsionspolymerisate aus $C_1$-$C_6$-Alkylacrylaten, insbesondere $C_2$-$C_6$-Alkylacrylaten, gegebenenfalls im Gemisch mit bis zu 15 Gew.-%. anderen, ungesättigten Monomeren wie Styrol, Methylmethacrylat, Butadien, Vinylmethylether, Acrylnitril, und aus wenigstens einem polyfunktionellem Vernetzer wie beispielsweise Divinylbenzol, Glykol-bis-acrylate, Bisacrylamide, Phosphorsäuretriallylester, Zitronensäuretriallylester, Allylester von Acrylsäure und Methacrylsäure, Triallylisocyanurat, wobei die Acrylatkautschuke bis zu 4 Gew.-% der vernetzenden Comonomere enthalten können.

Zur Herstellung der Pfropfpolymerisate sind auch Gemische von Dien- mit Acrylatkautschuken sowie Kautschuke mit einer Kern-Mantel-Struktur geeignet.

Die Kautschuke müssen zur Pfropfpolymerisation in Form diskreter Teile vorliegen, z. B. als Latex. Diese Teilchen haben i.a. mittlere Durchmesser von 10 nm bis 2.000 nm.

Die Pfropfpolymerisate können nach bekannten Verfahren, beispielsweise durch radikalische Emulsionspfropfpolymerisation der Vinylmonomeren in Gegenwart von Kautschuklatices bei Temperaturen von 50 bis 90 °C unter Verwendung wasserlöslicher Initiatoren wie Peroxodisulfat oder mit Hilfe von Redoxinitiatoren, erzeugt werden.

Bevorzugt sind radikalisch hergestellte Emulsionspfropfpolymerisate auf teilchenförmige, hochvernetzte Kautschuke (Dien- oder Alkylacrylatkautschuke) mit Gelgehalten > 80 Gew.-% und mittleren Teilchendurchmessern (d50) von 80 bis 800 nm.

Besonders geeignet sind technisch gebräuchliche ABS-Polymerisate.

Mischungen von Vinyl-Homopolymerisaten und/oder Vinyl-Copolymerisaten mit Pfropfpolymerisaten sind ebenfalls geeignet.

Bevorzugte andere Thermoplasten b) sind auch thermoplastische Polyurethane. Dies sind Reaktionsprodukte aus Diisocyanaten, ganz oder überwiegend aliphatischen Oligo- und/oder Polyestern und/oder -ethern sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind bekannt oder können nach bekannten Verfahren (siehe beispielsweise US-PS 3 214 411, J.H. Saunders und K.C. Frisch, "Polyurethanes, Chemistry and Technology", Vol II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Diemthyl-propylenglykol in Betracht. Darüberhinaus können gemeinsam mit den Glykolen

kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt vo ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane sind beispielsweise solche auf Basis von Tetramethylenglykol, Propylenglykol und Ethylenglkyol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane vorzugsweise 4,4'-Diphenylmethan-diisocyanat verwendet. Es sollte weniger als 5 % 2,4'-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4'-Diphenylens, das 2,2-Diphenylpropan-4,4'-diisocyanat, das Azobenzol-4,4'-diisocyanat, des Diphenylsulfon-4,4'-diisocyanat, das Dichlorhexamethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxy-ethylether, 1,3-Phenylen-bis-β-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3'-Dichlorbenzidin, 3,3'-Dinitrobenzidin, Ethanolamin, Aminopropylalkohol, 2,2-Dimethyl-propanolamin, 3-Aminocyclohexylalkohol und p-Aminobenzylalkohol zu nennen. Das Molverhältnis Oligo- bzw. Polyester zu bifunktionellem Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane eingesetzt werden.

Die als Bausteine für die thermoplastischen Polyurethane genannten Diisocyanate, Oligoester, Polyester, Polyether Kettenverlängerer und monofunktionellen Komponenten sind entweder literaturbekannt oder nach literaturbekannten Verfahren erhältlich.

Die bekannte Herstellung der Polyurethane kann beispielsweise wie folgt durchgeführt werden:

So können die Oligo- bzw. Polyester, die organischen Diisocyanate und die Kettenverlängerer für sich vorzugsweise auf eine Temperatur von ca. 50 bis 220 °C erhitzt und dann vermischt werden. Vorzugsweise

werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verringern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Bevorzugte andere Thermoplasten sind auch sogenannte "LC-Polymere". Als LC-Polymere werden Polymere bezeichnet, die flüssigkristalline Schmelzen bilden können. Derartige Polymere, die auch als "thermotrop" bezeichnet werden, sind hinreichend bekannt (siehe beispielsweise EP-OS 0 131 846, EP-OS 0 132 637 und EP-OS 0 134 959). In den genannten Literaturstellen ist weitere Literatur angezogen und darüber hinaus die Ermittlung des flüssigkristallinen Zustands von Polymerschmelzen beschrieben.

"LC-Polymere" sind beispielsweise aromatische Polyester auf Basis von gegebenenfalls substituierter p-Hydroxybenzoesäure, gegebenenfalls substituierten Iso- und/oder Terephthalsäuren, 2,7-Dihydroxynaphthalin und anderen Diphenolen (EP-OS 0 131 846), aromatische Polyester auf Basis von gegebenenfalls substituierter p-Hydroxybenzoesäure, Diphenolen, Kohlensäure und gegebenenfalls aromatischen Dicarbonsäuren (EP-OS 0 132 637) und aromatischer Polyester auf Basis von gegebenenfalls substituierter p-Hydroxybenzoesäure, 3-Chlor-4-hydroxybenzoesäure, Isophthalsäure, Hydrochinon und 3,4'- und/oder 4,4'-Dihydroxydiphenyl, 3,4'- und/oder 4,4'-Dihydroxydiphenyl, 3,4'- und/oder 4,4'-Dihydroxydiphenylether und/oder 3,4'- und/oder 4,4'-Dihydroxydiphenylsulfid (EP-OS 0 134 959).

Die LC-Polymere haben eine Persistenzlänge bei Zimmertemperatur zwischen 18 und 1300 Å, bevorzugt zwischen 25 und 300 Å, insbesondere zwischen 25 und 150 Å.

Die Persistenzlänge eines Polymeren bei Zimmertemperatur charakterisiert die mittlere Verknäuelung einer Molekülkette in einer verdünnten Lösung unter Theta-Bedingungen (vgl. z.B. P.J. Flory "Principles of Polymer Chemistry"), Cornell Univ. Press, Ithaca, New York) und die Hälfte der Kuhnschen Schrittlänge. Die Persistenzlänge kann mit verschiedenen Methoden in verdünnten Lösungen bestimmt werden, z.B. durch Lichtstreuung und Röntgenkleinwinkel-Messungen. Man kann nach geeigneter Präparation die Persistenzlängen auch mit Hilfe der Neutronenkleinwinkelstreuung im Festkörper bestimmen. Weitere theroretische und experimentelle Methoden sind z.B. in J.H. Wendorff in "Liquid Crystalline Order in Polymers", ed. A. Blumstein, Academic Press 1978, S. f16 ff sowie in den in "S.M. Aharoni Macromolecules 19, (1986), S. 429 ff" angegebenen Referenzen beschrieben.

Bevorzugte Elastomere b3) für die Komponente b) zur Herstellung der erfindungsgemäßen Mischungen sind die vorstehend erwähnten Polyurethane, soweit sie elastischer Natur sind, Styrol, Butadien-Blockcopolymere, die teilweise hydriert sein können (beispielsweise Kraton G® der Shell), die vorstehend für die Pfropfpolymerisate erwähnten Kautschuke, die Pfropfpolymerisate selbst, soweit sie elastisch sind sowie elastische Polycarbonat-Polyether-Blockcopolymere.

Diese Elastomeren sind bekannt.

Die erfindungsgemäßen Polymermischungen können als wärmeformbeständige thermoplastische Formmassen verwendet werden, Bevorzugt dienen sie der Herstellung von Folien nach allgemein bekannten Verfahren. Soweit die aus den Mischungen hergestellten Formteile transparent sind, sind sie insbesondere für optische Anwendungen verwendbar.

Die Herstellung der Folien ist im folgenden kurz beschrieben:

Die erfindungsgemäßen Folien haben Dicken von 1-3000 µm, bevorzugt 1,2 bis 1500 µm. Sie können mono- oder biaxial verstreckt und/oder gereckt werden, bevorzugt im Verhältnis 1:1,5 bis 1:5,0. Diese Folien sind besonders geeignet als wärmeformbeständige Folien.

Aus den erfindungsgemäßen Polymermischungen können Folien durch Extrusion, Tiefziehen oder durch Gießen von Lösungen in üblichen Lösungsmitteln (Methylenchlorid, Dimethylformamid, N-Methylpyrrolidon, Tetrahydrofuran, Dioxan, Dioxolan) hergestellt werden. Durch Extrusion - im allgemeinen bei 80 bis 450 °C - hergestellte Folien werden häufig nach Abkühlen um mindestens 50 °C (aber nicht unterhalb Zimmertemperatur) biaxial verstreckt. Zum Tiefziehen geeignete Folien kann man auch durch Auswalzen von Blöcken aus den Polymermischungen bei Temperaturen bis 350 °C erhalten,

Gießfolien erhält man durch Ausgießen von konzentrierten Lösungen der Polymermischungen auf ebene Oberflächen und Verdampfen des Lösungsmittels bei 30 bis 270 °C. Als ebene Fläche kann man auch die Oberfläche einer Flüssigkeit verwenden, die eine höhere Dichte als die Polymerlösung hat und weder die Polymeren noch deren Lösungsmittel auflöst.

Die erfindungsgemäßen Folien können allein oder im Verbund mit Folien aus anderen Polymeren verwendet werden.

Beispiele:

1. Herstellung eines Bisphenols der Formel (A)

(A)

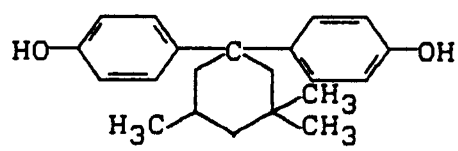

In einem 1-Liter-Rundkolben mit Rührer, Tropftrichter, Thermometer, Rückflußkühler und Gasleitungsrohr werden 7,5 Mol (705 g) Phenol und 0,15 Mol (30,3 g) Dodecanthiol bei 28 bis 30 °C mit trockenem HCl-Gas gesättigt. Zu dieser Lösung wird bei 28 bis 30 °C innerhalb 3 Stunden eine Mischung von 1,5 Mol Dihydroisophoron (210 g) und 1,5 Mol (151 g) Phenol zugetropft, wobei weiterhin HCl-Gas durch die Reaktionslösung geleitet wird. Nach beendeter Zugabe wird weitere 5 Stunden HCl-Gas eingeleitet. Zur Vervollständigung der Reaktion läßt man 8 Stunden bei Zimmertemperatur stehen. Anschließend wird überschüssiges Phenol durch Wasserdampf-Destillation entfernt. Der verbleibende Rückstand wird zweimal mit je 500 ml Petrolether (60-90) und einmal mit 500 ml Methylenchlorid heiß extrahiert und abfiltriert. Ausbeute: 370 g, entsprechend 79 %. Schmelzpunkt: 205-207 °C

2. Herstellung der für die erfindungsgemäßen Mischungen verwendbaren Polyethersulfone

Beispiel 2a:

In einer mit Stickstoff gespülten Rührapparatur, die mit einem Wasserabscheider versehen ist, werden 31,04 g (0,1 Mol) des Bisphenols der Formel (A), 28,72 g 4,4'-Dichlordiphenylsulfon, 200 ml N-Methylpyrrolidon, 100 ml Toluol und 18 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180 °C erhöht. Der Ansatz wird 4 h bei 180 °C gerührt und anschließend für 1 h auf 190-195 °C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1:1) daraus isoliert. Zur weiteren Reinigung wird das Polymer in Methylenchlorid gelöst und anschließend in Methanol gefällt. Abschließend wird 14 h bei 120 °C im Vakuum getrocknet. Ausbeute: 35,8 g; relative Viskosität gemessen in Methylenchlorid bei 25 °C und einer Polymerkonzentration von 5 g pro Liter: 1,19, Glastemperatur, bestimmt mit Hilfe der DSC-Methode bei einer Aufheizgeschwindigkeit von 20 K/min.: 236 °C.

Mit Hilfe der sogenannten Thermomechanischen Analyse TMA wurde das Erweichungsverhalten der Probe bei einer Aufheizrate von 1 K/min durch das Eindringverhalten eines kreisrunden Stempels (Durchmesser 1 mm) und einer aufliegenden Last von 20 Pond (0.2 N) bestimmt. Erst oberhalb 241 °C drang der Stempel signifikant in die Probe ein.

Beispiel 2b:

In einer Rührapparatur entsprechend Beispiel 2a werden nach dem gleichen Verfahren wie in Beispiel 2a 15,52 g (0,05 Mol) des Bisphenols der Formel (A), 11,4 g Bisphenol A (2,2-Bis-(4-hydroxyphenyl)-propan; 0,05 Mol), 28,72 g 4,4'-Dichlordiphenylsulfon, 200 ml N-Methylpyrrolidon, 100 ml Toluol und 18 g Kaliumcarbonat miteinander umgesetzt. Nach Aufarbeitung wie in Beispiel 2a wurde ein Polysulfon mit einer relativen Lösungsviskosität, gemessen wie in Beispiel 2a, von 1.160 isoliert. Glastemperatur nach DSC: 213 °C, TMA-Analyse: Eindringpunkt etwa 218 °C.

Beispiel 2c:

Entsprechend Beispiel 2 a wurden 31,04 g des Bisphenols der Formel (A), 28,72 g 4,4'-Dichlordiphenylsulfon, 200 ml N-Methylcaprolactam, 100 ml Toluol und 18 g Kaliumcarbonat miteinander umgesetzt. Anschließend wurde eine weitere Stunde bei 210 °C, danach noch eine Stunde bei 230 °C gerührt. Nach Aufarbeitung entsprechend Beispiel 2a wurden 39,4 g Polyethersulfon isoliert; relative Lösungsviskosität 1,131, gemessen wie in Beispiel 2a), Glastemperatur nach DSC: 228 °C, TMA-Erweichungspunkt, bestimmt analog Beispiel 2a: 230 °C.

3. Für die nachfolgenden Beispiele verwendete Polymere b):

a) Poly-para-phenylensulfid - hergestellt nach EP-PS 142 024, Beispiel 2, mit einer Schmelzviskosität von 120 Pa.s, gemessen bei 306 °C und einer Scherrate von 1000/sec.

b) Polycarbonat aus dem Bisphenol-A mit einer in Methylenchlorid bei 25 °C und einer Konzentration von c = 0,5 g/dl Polymer gemessenen relativen Viskosität von 1.28 und einem $\overline{M}w$ (gewichtsgemitteltes Molekulargewicht) von 28.500 g/mol. Glastemperatur - gemessen mit der DSC bei einer Aufheizgeschwindigkeit von 20 K/min - ca. 146 °C.

4. Herstellung der Mischungen

a) 15 g des Poly-para-phenylensulfid 3 a) wurde bei 310 °C mit 15 g des Polyethersulfons 2) in einem Kleinkneter innig vermischt. Anschließend wurde aus der vermischten Menge bei 280 °C unter Anwendung eines Druckes von 200 bar nach 5 minütigem Pressen ein Formteil einer Dicke von etwa 1 mm gepreßt. Die Wärmformbeständigkeit der Mischung kann z.B. durch den Schubmodul, gemessen mit einem Torsionspendel der Firma Brabender bei einer Zugbelastung von 10 pond (0,1 N) und einer Aufheizgeschwindigkeit von 1 K/min, charakterisiert werden. Die unten stehende Tabelle I zeigt den deutlich höheren Modul der erfindungsgemäßen Mischung im Vergleich zu dem nicht erfindungsgemäßen Poly-para-phenylensulfid

b) 10 g des Poly-ethersulfons 2) wurden mit 1 g Polycarbonat 3 b) in 100 ml Methylenchlorid gelöst, die Lösungen zusammengemischt und eingedickt. Anschließend wurde eine Folie durch Spreiten auf einer Glasplatte hergestellt. Die Folie hatte eine Dicke von 150 µm. Die Folie war tranparent und hatte eine Glastemperatur von 214 °C.

c) 2 g Polyethersulfon 2) wurde wie unter 4 b) - jedoch mit 8 g Polycarbonat 3 b) vermischt. Die hergestellte Folie hatte eine Dicke von 154 µm. An dieser Folie wurde die Glastemperatur gemessen. Ergebnis (nach DSC): 168 °C. Im Vergleich zu einer Folie aus Polycarbonat 3 b) (Dicke: 140 µm) wurde die Permeabilität bezüglich der Gase Sauerstoff und Kohlendioxid gemessen, wobei zum Vergleich auch die Polycarbonatfolie aus einer eingedickten Lösung von Methylenchlorid gewonnen wurde. Beide Folien, die Vergleichsfolie aus Polycarbonat 3 b) und die erfindungsgemäße Folie, wurden bei 100 °C 2 h unter Vakkum getrocknet, anschließend wurde mit Druckmeßkondensatoren für eine Folie mit einer Querschnittfläche von etwa 4 $cm^2$ die Permeabilität für einige Gase gemessen. Die Tabelle III vergleicht Permeabilität und Wärmeformbeständigkeit. Sie zeigt, daß die erfindungsgemäße Folie bei mindestens gleicher Permeabilität eine verbesserte Wärmeformbeständigkeit hat.

Beispiel 4d:

Analog Beispiel 4a wurden 10 g Substanz 3a) und 30 g Substanz 2b) bei 335 °C innig vermischt und im Torsionspendel charakterisiert. Ergebnisse siehe Tabelle I.

Beispiel 4e:

Analog Beispiel 4a wurden 20 g Substanz 3a) und 30 g Substanz 2c) bei 330 °C innig vermischt und im Tosionspendel charakterisiert. Ergebnisse siehe Tabelle I.

Tabelle I:

Vergleich des Schubmoduls

| Substanz | Schubmodul in MPa bei | | |
| --- | --- | --- | --- |
| | T = 110° C | T = 140° C | T = 200° C |
| PPS 3 a) (Vergleich) | 150 | 110 | 98 |
| Erf. gem. | | | |
| Beispiel 4 a) | 750 | 500 | 450 |
| Beispiel 4 d) | 800 | 610 | 420 |
| Beispiel 4 e) | 790 | 615 | 460 |

Tabelle II:

| Vergleich der Glastemperatur und Transparenz | | |
|---|---|---|
| Substanz | Glastemperatur | Aussehen |
| Polycarbonat 3 b) (Vergleich) | 146 °C | transparent |
| Erf. gem. Beispiel 4 b) | 214 °C | transparent |
| Erf. gem. Beispiel 4 c) | 168 °C | transparent |

Tabelle III:

Vergleich der Permeabilität P

(Einheiten: $\frac{cm^2 \cdot mm}{m^2 \cdot 24h \cdot 10^5 Pa}$

für die Gase (Sauerstoff, Kohlendioxid) und Glastemperatur

| Substanz | P(O2) | P(CO2) | Tg (°C, DSC) |
|---|---|---|---|
| Polycarbonat 3 b) (Vergleich) | 72,0 | 366,0 | 146°C |
| Erf. gem. Beispiel 4 c) | 72,0 | 433,0 | 160°C |

**Patentansprüche**

**1.** Mischungen, enthaltend aromatische Polyethersulfone auf Basis von Diphenolen der Formel (I)

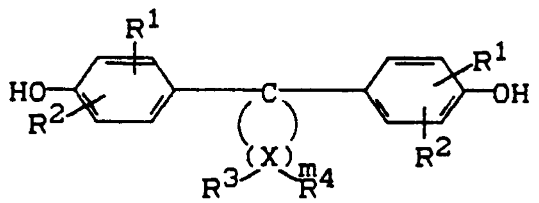

(I),

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, |

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl ist,

und andere organische Polymere.

**2.** Mischungen nach Anspruch 1, in denen das andere organische Polymer ein Polycarbonat auf Basis von Bisphenol A oder ein Polyester oder Polyestercarbonat auf Basis von Bisphenol A ist.

**3.** Folien einer Dicke von 1 bis 3000 µm aus den Mischungen gemäß Anspruch 1.

**4.** Verwendung der Mischungen nach Anspruch 1 für optische Anwendungen.

**Claims**

**1.** Mixtures containing aromatic polyether sulfones based on diphenols corresponding to formula (I)

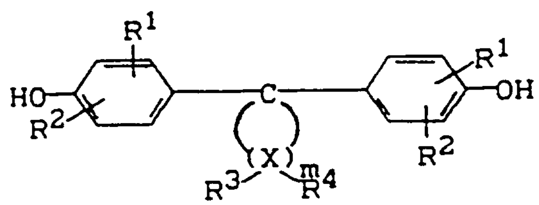

(I),

in which

$R^1$ and $R^2$ independently of one another represent hydrogen, halogen, $C_{1-8}$ alkyl, $C_{5-6}$ cycloalkyl, $C_{6-10}$ aryl and $C_{7-12}$ aralkyl,

m is an integer of 4 to 7,

$R^3$ and $R^4$ may be individually selected for each X and independently of one another represent hydrogen or $C_{1-6}$ alkyl and

X represents carbon,

with the proviso that, at at least one atom X, $R^3$ and $R^4$ are both alkyl;

and other organic polymers.

**2.** Mixtures as claimed in claim 1 in which the other organic polymer is a polycarbonate based on bisphenol A or a polyester or polyester carbonate based on bisphenol A.

**3.** 1 to 3000 µm thick films of the mixtures claimed in claim 1.

**4.** The use of the mixtures claimed in claim 1 for optical applications.

**Revendications**

**1.** Mélanges, renfermant des polyéthersulfones aromatiques à base de diphénols de la formule (I)

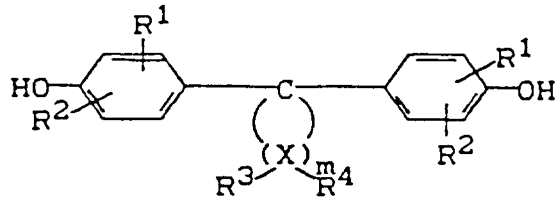

(I),

dans laquelle

$R^1$ et $R^2$ représentent, indépendamment l'un de l'autre, l'hydrogène, un halogène un alkyle de $C_1$ à $C_8$, un cycloalkyle de $C_5$ à $C_6$, un aryle de $C_6$ à $C_{10}$ et un aralkyle de $C_7$ à $C_{12}$,

m est égal à un nombre entier de 4 à 7,
$R^3$ et $R^4$ correspondent pour chaque X sélectionnable individuellement, indépendamment l'un de l'autre, l'hydrogène ou un alkyle de $C_1$ à $C_6$ et
X représente le carbone,
dans la mesure où, sur au moins un atome X, $R^3$ et $R^4$ sont simultanément un alkyle,
et d'autres polymères organiques.

**2.** Mélanges selon la revendication 1, dans lesquels l'autre polymère organique est un polycarbonate à base de bisphénol A, ou un polyester ou un polyestercarbonate à base de bisphénol A.

**3.** Feuilles d'une épaisseur de 1 à 3000 µm à base de mélanges conformes à la revendication 1.

**4.** Utilisation des mélanges selon la revendication 1 pour des applications optiques.